# EUROPEAN PATENT APPLICATION

(11) **EP 4 266 588 A1**
(43) Date of publication of application: **25.10.2023**
(21) Application number: 22461538.5
(22) Date of filing: 23.04.2022
(51) Int. Cl.: H04B 5/00, H04B 5/02, G06K 7/10, G06K 19/06, G01F 23/284

(54) **CONTAINER FOR PRESSURIZED LIQUID GAS AND LIQUID LEVEL MEASURING SYSTEM**

(71) Applicant: Aiut Sp. z o.o., 44-109 Gliwice (PL)
(72) Inventor: Gabrys, Marek, 44-109 Gliwice (PL); Frankiewicz, Artur, 44-109 Gliwice (PL)
(74) Representative: AOMB Polska Sp. z.o.o.

(57) **Abstract**

According to the present invention there is provided a container (1) for pressurized liquid gas, such as LPG or LNG, having an opening (2) leading from outside to inside of the container (1) and having a microwave fluid level sensor (4) mounted on the outside of the container (1) over the opening (2) and configured to emit a microwave beam towards the inside of the container (1) and to receive a microwave beam reflected from the surface of the liquid inside the container (1). Between the microwave fluid level sensor (4) and the inside of the container (1) there is a lid (3) closing the opening (2), wherein said lid (3) is made of plastic material capable of transmitting at least a part of said microwave beams.

## Description

### TECHNICAL FIELD

The present invention generally relates to the field of containers for storing liquid products, and to measuring devices for determining and monitoring a fill level of a product stored in the container by means of a microwave transit time measuring method. More specifically, the subject matter of the present invention is a container for pressurized liquid gas, such as LPG (liquefied petroleum gas) or LNG (liquified natural gas), comprising a microwave fluid level sensor. The present invention also relates to a liquid level measuring system.

### BACKGROUND ART

Various devices for monitoring and measuring a fill level of a liquid medium in a container are presently known. These are for example mechanical float level indicators, magnetostrictive probes, ultrasound sensors and radar (microwave) tank gauges.

Each of these known devices has some drawbacks. Some of them have mechanical movable parts that can be jammed or do not work accurately on low liquid level. Others are difficult to be installed or replaced on a container since they require degasification of the tank or are expensive.

Known radar tank gauge operates on the principle of a microwave transit time measuring method for determining the fluid level in a container. The filling level of the medium in a container is determined based on the transit time of the measurement signal being a distance between microwaves transmitted via an antenna towards the surface of the medium and microwaves reflected on the surface of the medium and received by a transceiver.

These known measuring devices or their elements are exposed to high pressures, as they require mounting some elements inside the container/tank, or at least require a though hole in the tank to fit the sensor in.

In order to protect the measuring electronics in the transmitter and the microwave signal coupling from the high pressures and aggressive chemical substances, as well as to keep the radiation characteristics of the antennas constant, sensitive elements of the sensor elements or antennas are hermetically sealed on the outside of the container (tank).

WO 2003/046491 A1 discloses an antenna for level measurement to be protected from aggressive chemical media and high temperatures by at least partial filling with a dielectric material or a disk-shaped dielectric element.

WO 01/88488 A1 discloses a fill level measuring device with an antenna, with a hollow conductor, with a hollow conductor coupling in the form of a circuit board and an electrically conductive body attached to it, which protrude into the hollow conductor.

### SUMMARY OF THE INVENTION

The objective of the present invention is to provide a simple and cost-effective solution for measuring a fill level of a liquid medium in a closed container which eliminates the above-indicated drawbacks.

According to the first aspect of the present invention there is provided a container for pressurized liquid gas, such as LPG or LNG having an opening leading from outside to inside of the container for mounting a microwave fluid level sensor on the outside of the container over the opening and configured to emit a microwave beam towards the inside of the container and to receive a microwave beam reflected from the surface of the liquid inside the container, and further comprises a lid closing the opening, wherein said lid is made of a plastic material capable of transmitting at least a part of said microwave beams.

Throughout the disclosure of the present invention, "a lid made of a material capable of transmitting at least a part of a microwave beam" means that the lid is made of such a material that at least part of the microwave beam emitted from the sensor is able to go throughout the lid into the container and at least part of the microwave beam reflected from the surface of the liquid inside the container is able to go throughout the lid back to the sensor.

In one embodiment the opening is equipped with a flange for mounting a fluid level sensor and said lid is mounted on said flange, preferably on a top of the container.

In another embodiment the lid is tightly sealed.

In another embodiment the lid is made of a thermoformable plastic, a raisin or a polymer based composite reinforced with a mineral or synthetic material.

In another embodiment the lid is made of the plastic material having similar thermal expansion coefficient as the container in working temperature range of LPG or LNG.

In another embodiment the lid is made of a modified polyamide.

In another embodiment the lid is made of polyaryletherketone, preferably of polyether ether ketone.

In another embodiment the lid is partially made of metal.

In another embodiment the lid has a flat bottom surface or a convex spherical bottom surface.

In another embodiment the container further comprises a microwave fluid level sensor mounted on the outside of the container over the opening and configured to emit a microwave beam towards the inside of the container and to receive a microwave beam reflected from the surface of the liquid inside the container, and mounting means configured for assembling and disassembling the microwave fluid level sensor from the container without removing the lid, wherein said lid closes the opening in the container and is located between the fluid sensor level and the inside of the container.

In another embodiment the microwave fluid level sensor is configured for analyzing the received microwave beam using an algorithm, preferably an adaptive algorithm.

According to the second aspect of the present invention there is also provided a liquid level measuring system comprising the above disclosed container and further comprising a data logging device.

In one embodiment the system further comprises a display, preferably an LCD display or an e-paper display.

In another embodiment the system further comprises a power source, preferably a battery or a photovoltaic cell.

In yet another embodiment the photovoltaic cell is a silicon-based cell or a perovskite-based cell.

### BRIEF DESCRIPTION OF THE DRAWINGS

The present invention will now be discussed in more details with reference to the attached drawings, in which:
FIG. 1 is an exploded view of a liquid level measuring system according to the preferred embodiment of the present invention.

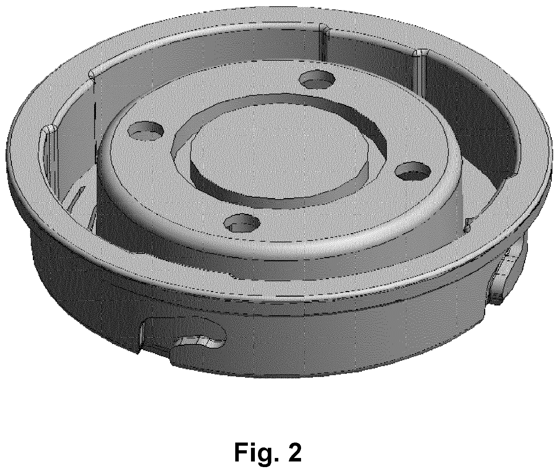

FIG. 2 is a bottom side view of a lid.
FIG. 3 is an obstacle detection chart measured by a liquid level measuring system.

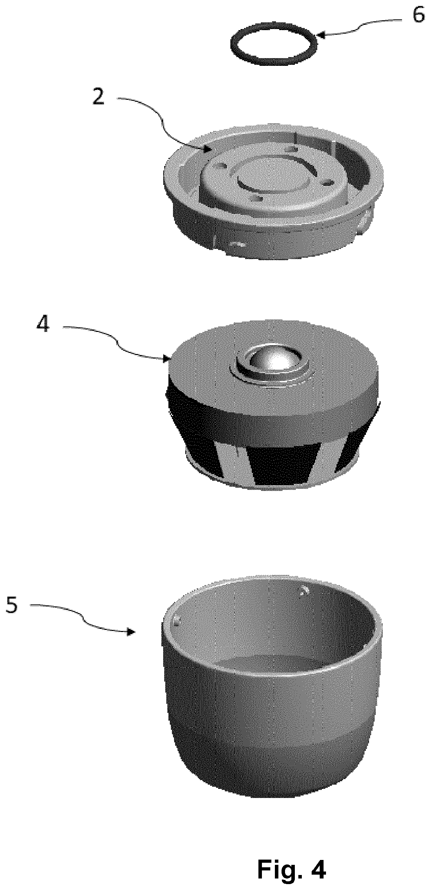

FIG. 4 is an exploded side view of the liquid level measuring system without the container.

### DETAILED DESCRIPTION OF THE PREFERRED EMBODIMENTS

Tanks for storing fluids like petrol and other flammable products are in general metal containers which are tightly sealed for not allowing any vapors going out of the container and not allowing any substances going into the container. Some flammable products are stored under pressure which means the pressure in the container is higher than the pressure outside the container.

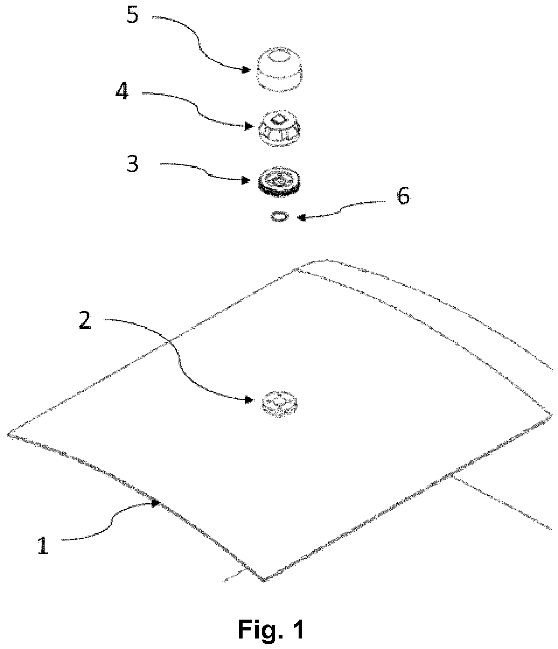

Fig. 1 shows a liquid level measuring system in an exploded view according to a preferred embodiment of the present invention. A container 1 (partial view shown only) is a metal tank for storing pressurized liquid gas, such as LPG (liquefied petroleum gas) or LNG (liquified natural gas). The information about the amount of a stored liquid is crucial while usage as the gas is valuable. A sudden gas level drop might also indicate a leakage of the gas in a storage or delivery system. That is why the container 1 has an opening 2 (a through hole in the tank wall) leading from the outside to the inside of the container 1. A microwave fluid level sensor 4 is mounted on the outside of the container 1 over said opening 2. The microwave fluid level sensor 4 emits a microwave beam towards the inside of the container 1 and receives back a signal reflected by the surface of the liquid. A portion of the emitted microwave beam goes through the lid while the rest is reflected or scattered by the lid 3. The portion of the beam that went through goes further towards the surface of the liquid and again, a portion of the beam reflected from that surface goes back through the lid 3 to the sensor 4 and the other portion penetrates the liquid towards the bottom of the container 1. After reaching the bottom the portion of the microwave beam reflected from the bottom goes back towards the sensor 4, too.

By calculating time difference or frequency difference between the emitted microwave beam and the microwave beam reflected from the surface of the liquid inside the container 1 and received back by the microwave fluid level sensor 4, one can estimate the level of the liquid. Based on this estimation a fill level of the liquid can be determined. The microwave fluid level sensor 4 may be configured and programmed for performing such estimations.

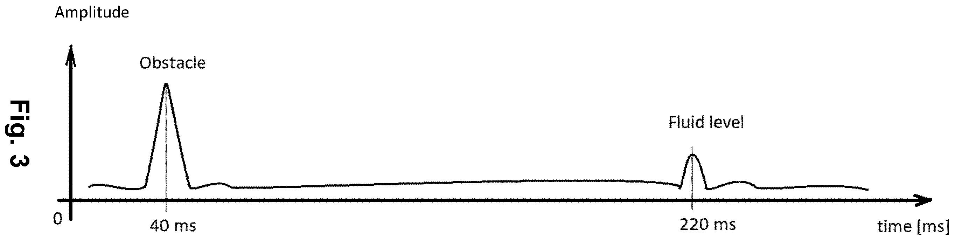

In the preferred embodiment the microwave fluid level sensor 4 is capable to receive all reflected beams (that is beams reflected from different surfaces including the gas surface) and select only the beam reflected from the surface of the liquid stored in the container 1 for measuring the level of the liquid. Algorithms for selection of the right beam based on signal analyze algorithms like FFT (Fast Fourier Transformation) and/or adaptive algorithms based on machine learning algorithms can be used. Figure 3 is a chart showing two reflected beams that have been received and analyzed. The first beam with a bigger amplitude is the beam reflected from the lid 3 itself. The second one with a smaller amplitude is the beam reflected from the gas surface. Received beams chart may be much more complicated as there may be much more reflections, refractions of beams.

As mentioned in the beginning liquids stored in containers are flammable and chemically aggressive. Any direct contact with the microwave fluid level sensor 4 could cause a damage to the sensor or its elements. In worst scenario, it can even lead to the ignition of vapors caused by an electric spark produced by the electronics of the sensor. Therefore, the container 1 is provided with the lid 3 closing the opening 2 and sealing the container 1.

The lid 3 is made of plastic capable of transmitting microwaves at least partially. Preferably the plastic is a synthetic polymer, a thermoplastic polymer like polyaryletherketone (PAEK) or polyether ether ketone (PEEK), or a raisin-based polymer. In some preferred embodiments the lid 3 is made of a polymer based composite reinforced with a mineral or a synthetic material. The lid 3 must be as strong as the container 1 and must withstand harsh conditions of stored gas inside the container 1. It must also withstand harsh weather conditions outside the container. The container 1 shrinks and expands while being filled, emptied and heated (e.g., by the sun while storing outside) or cooled down (e.g., while decompressing pressurized gas stored inside). The main function of the lid 3 is to seal the container and withstand the mechanical stresses, in the same way as the container 1 withstands, while being at least partially transparent (translucent) for microwaves. Partially transparent (translucent) meaning that at least a portion of the microwave beam directed towards the lid 3 is capable of going through it.

The lid 3 is firmly and tightly attached to the container 1, preferably by the use of screws, bolts, rivets, glue or pressed into. The attachment must be strong enough to hold the pressure and temperature of the stored liquid.

In one of preferred embodiments of the invention there is provided a container 1 suitable for pressurized liquid gas, such as LPG or LNG is provided. The container 1 have an opening 2 leading from outside to inside of the container 1 suitable for mounting a microwave fluid level sensor 4 on the outside of the container 1 over the opening 2. The container 1 further comprises a lid 3 closing the opening 2, wherein said lid 3 is made of a plastic material capable of transmitting (being at least partially transparent and/or translucent, meaning that at least a portion of a microwave beam directed to the lid 3 is capable of going though) at least a part of microwave beam when directed to it. The lid 3 is attached to the container 1.ln the preferred embodiment the container 1 has a flange around the opening 2. The flange is a part of the wall of the container 1 that has greater thickness around the opening 2 than the rest of the wall of the container 1. The flange may have a flat, parallel to the ground, surface on the upper side, suitable for attachment the liquid lever sensor of any kind (mechanic, acoustic, microwave) or the lid 3. In the preferred embodiment the lid 3 is mounted on the flange for better leveling of the fluid level sensor 4 when mounted to the lid 3. The flange is positioned on the top of the container 1 for more precise measurements. The flange for mounting the lid 3 and/or the fluid level sensor 4 can be positioned in different places. Also, the flange flat surface angle might vary.

The lid 3 is tightly sealed using a sealing element 6, e.g., rubber O-ring or any other method like glued in, pressed into, or tightly screwed. The lid 3 is preferably made of a plastic material having the ability to deform under high pressure and to adapt to the surface for sealing the connection.

Preferably the lid 3 is made of a thermoformable plastic material for easy manufacturing process using the injection molding or 3D printing technology. The lid can be also made of a raisin or a polymer based composite reinforced with a mineral or synthetic material.

In some embodiments the lid 3 is made partially form metal having a small portion of plastic material in the center forming a window like structure. The metal part reinforces the lid 3 in the outer parts or on the edges.

In one embodiment the liquid level measuring system comprises a microwave focusing element on the side, preferably the bottom side, of the lid 3 facing the inside of the container 1. The lid focusing element constitutes a specially shaped bottom surface suitable for forming microwaves generated by the sensor into a beam of a certain shape. Container of different shapes and different liquids may require beams of different shapes for better measurement accuracy. Microwaves beam propagated inside the metal container can reflect, focus, or scatter in complex manner making detection of the reflected beam difficult. As a result, the accuracy of the measurement is very low. In the preferred embodiment the focusing element has a convex spherical surface in the center. Convex spherical shape is preferred for metal containers of cylindrical shape filled with liquid gas like LPG or CNG.

In another preferred embodiment the lid 3 has a flat bottom surface. Flat surface is less susceptible for accumulation of condense gas or moisture drops (droplets) in one particular spot. This makes the measurement more precise.

In a preferred embodiment the container 1 further comprises a microwave fluid level sensor 4, mounted on the outside of the container 1 over the opening 2. The microwave fluid level sensor 4 is configured to emit a microwave beam towards the inside of the container 1 and to receive a beam reflected from the liquid surface. The microwave fluid level sensor 4 also comprises mounting means configured for assembling and disassembling the microwave fluid level sensor 4 from the container 1 without removing the lid 3. The microwave fluid level sensor 4 is configured to receive all reflected and/or scattered beams and select the beam reflected from the liquid surface.

The microwave fluid level sensor 4 can be attached to the lid by using screws, thread, bayonet mount, press fit, magnets, glue, or other means suitable for easy disconnecting the microwave fluid level sensor 4 from the lid 3.

A cover 5 is preferable used to protect the microwave fluid level sensor 4 from the outside.

In yet another embodiment of the invention, the liquid level measuring system comprises a data logging device. Said data logging device is typically comprised of a microprocessor unit having a data storage element and a CPU unit programmed for liquid level calculations, storing information and/or communication. In preferred embodiment, the microwave fluid level sensor 4 is communicatively connected to other data processing units via radio communication means or cable connection. This includes internet communication via cable infrastructure or radio such as WI-FI, GSM, Bluetooth and alike.

In some embodiments the liquid level measuring system further comprises a display, preferably an LCD display or e-paper display suitable for presenting information about at least a liquid level in the container.

The liquid level measuring system may comprise a power source, preferably a battery or photovoltaic cell, wherein the photovoltaic cell is a silicon-based cell or a perovskite-based cell.

In another preferred embodiment the liquid level measuring system is configured for processing the information about the signals received for the inside of the container. Signals are processed using advance signal processing methods like Fast Fourie's Transformant or alike, for measuring other liquid parameters like composition, purity, temperature, density, rheology. In another embodiment the liquid level measuring system is configured for measuring above mentioned parameters of the vapors above liquid surface.

The microwave fluid level sensor 4 according to the invention uses a tank level measurement method based on radar technology. The radar system provides high precision, low power solution and fast and easy installation on the tank without interfering with the tank structure. Radio band operation without interference from noise, dust, color nor direct or indirect light. The sensor operates at 60GHz providing few mm accuracy of up to 5 m distance.

Radar measurement technology can penetrate plastic obstacles providing precise fluid level measurement by the sensor located outside the tank. The sensor has to be located at the top of the tank. Example sensor response and detection of possible obstacles and fluid level.

## Claims

1. A container (1) for pressurized liquid gas, such as LPG or LNG, having an opening (2) leading from outside to inside of the container (1) for mounting a microwave fluid level sensor (4) on the outside of the container (1) over the opening (2) and configured to emit a microwave beam towards the inside of the container (1) and to receive a microwave beam reflected from the surface of the liquid inside the container (1), **characterized in that** it further comprises a lid (3) closing the opening (2), wherein said lid (3) is made of a plastic material capable of transmitting at least a part of said microwave beams.

2. The container according to claim 1, **wherein** the opening (2) is equipped with a flange for mounting a fluid level sensor and said lid (3) is mounted on said flange, preferably on a top of the container (1)

3. The container according to claim 1 or 2, **wherein** the lid (3) is tightly sealed.

4. The container according to any one of preceding claims 1 to 3, **wherein** the lid (3) is made of a thermoformable plastic, a raisin or a polymer based composite reinforced with a mineral or synthetic material.

5. The container according to any one of preceding claims 1 to 4, **wherein** the lid (3) is made of the plastic material having similar thermal expansion coefficient as the container (1) in working temperature range of LPG or LNG.

6. The container according to any one of preceding claims 1 to 5, **wherein** the lid (3) is made of a modified polyamide.

7. The container according to claim 6, **wherein** the lid (3) is made of polyaryletherketone (PAEK), preferably of polyether ether ketone (PEEK).

8. The container according to any one of preceding claims 1 to 7, **wherein** the lid (3) is partially made of metal.

9. The container according to any one of preceding claims 1 to 8, **wherein** the lid (3) has a flat bottom surface or a convex spherical bottom surface.

10. The container according to any one of preceding claims 1 to 9, **wherein** it further comprises a microwave fluid level sensor (4) mounted on the outside of the container (1) over the opening (2) and configured for emitting a microwave beam towards the inside of the container (1) and for receiving a microwave beam reflected from the surface of the liquid inside the container (1), and mounting means configured for assembling and disassembling the microwave fluid level sensor (4) from the container (1) without removing the lid (3), wherein said lid (3) closes the opening (2) in the container (1) and is located between the fluid sensor level (4) and the inside of the container (1).

11. The container according to claim 10, **wherein** the microwave fluid level sensor (4) is configured for analyzing the received microwave beam using an algorithm, preferably an adaptive algorithm.

12. A liquid level measuring system comprising the container (1) according to any one of the preceding claims 1 to 11 and further comprising a data logging device.

13. The system according to claim 12, **wherein** it further comprises a display, preferably an LCD display or an e-paper display.

14. The system according to claim 12 or 13, **wherein** it further comprises a power source, preferably a battery or a photovoltaic cell.

15. The system according to claim 14, **wherein** the photovoltaic cell is a silicon-based cell or a perovskite-based cell.
